# EUROPÄISCHE PATENTANMELDUNG

(11) **EP 0 756 884 A1**
(43) Veröffentlichungstag der Anmeldung: **05.02.1997**
(21) Anmeldenummer: 96112468.2
(22) Anmeldetag: 01.08.1996
(51) Int. Cl.: B01D 29/11, B01D 29/54, B01D 29/86

(54) **Filtervorrichtung**

(30) Priorität: 04.08.1995 DE 19528775
(71) Anmelder: PREMARK FEG CORPORATION, Wilmington, Delaware 19801 (US)
(72) Erfinder: Truetsch, Claus, 77933 Lahr (DE)
(74) Vertreter: Füchsle, Klaus, Dipl.-Ing.

(57) **Zusammenfassung**

Eine Filtervorrichtung (10) zum Trennen von dispergierten Feststoffen oder Flüssigkeiten aus einer Flüssigkeit umfaßt einen Behälter (12) mit einem Rotoraufbau (18) und daran befestigten Rührelementen (50), die auf einem oder mehreren zur Drehachse des Rotors konzentrischen Kreisen angeordnet sind sowie eine Vielzahl von Filterelementen (30), die in dem Behälter parallel zur Drehachse des Rotors und ringförmig auf mindestens einem zur Drehachse des Rotors konzentrischen Ring angeordnet sind. Die Filtervorrichtung ist dadurch gekennzeichnet, daß die Rührelemente streifenförmig ausgebildet sind und in einem Winkel zur Drehachse des Rotors geneigt sind.

## Beschreibung

Die vorliegende Erfindung betrifft eine Filtervorrichtung zum Trennen von dispergierten Feststoffen oder Flüssigkeiten aus einer Flüssigkeit nach dem Oberbegriff des Anspruchs 1.

Unter dispergierten Feststoffen oder Flüssigkeiten in Flüssigkeiten sollen im Fall von Feststoffen in Flüssigkeiten Dispersionen oder Aufschlämmungen, im Fall von Flüssigkeiten in Flüssigkeiten Emulsionen oder Lösungen, verstanden werden. Dispersionen treten in Industrieabwässern aber auch beispielsweise bei Küchenabwässern auf.

Derartige Filtervorrichtungen dienen der Filtration von mit dispersen Feststoffen oder Flüssigkeiten beladenen Flüssigkeiten, die in einen Behälter eingeleitet werden. Die zu behandelnde Flüssigkeit, im folgenden mit Vorlage bezeichnet, tritt im Behälter durch die Filterelemente hindurch und in abgereinigter Form als Filtrat durch das Innere der Filterelemente aus der Filtervorrichtung aus.

Der abzutrennende dispergierte Stoff wird am Eintritt in die Filterelemente gehindert, so daß sich die vom Filterelement zurückgehaltenen Stoffe an den Filterelementen zu Filterkuchen oder Filterrückständen aufbauen und den Flüssigkeitsdurchsatz durch die Filterelemente verringern, wenn die Filterrückstände nicht regelmäßig von der Filteroberfläche entfernt werden oder an einer Ablagerung auf der Filteroberfläche gehindert werden.

In der Technik ist die Querstromfiltertechnik bekannt, die eine Ablagerung der Filterrückstände auf den Filterelementen reduzieren oder im günstigsten Fall verhindern soll. Bei der Querstromfiltertechnik wird eine quer zur Oberfläche des oder der Filterelemente verlaufende Strömungskomponente erzeugt, welche die Ablagerung von Filterrückständen auf dieser Oberfläche verhindern soll.

Hierzu sind Vorrichtungen bekannt, bei denen zylinderförmige Filterelemente jeweils um ihre Längsachse rotieren, wobei nebeneinander angeordnete Filterelemente jeweils in entgegengesetzter Drehrichtung rotieren. Somit wird an allen Filterkörpern eine Querströmung erzeugt. Allerdings ist der Antrieb der einzelnen Filterelemente sehr aufwendig.

In der DE 4 340 218 wird eine Filtervorrichtung zum Abtrennen dispergierter Feststoffe beschrieben, bei der die Filterelemente in einem Filtrationsbehälter in der einen Behälterstirnwand befestigt und durch diese hindurch entwässert werden. Die Querströmung wird dadurch erzeugt, daß in der gegenüberliegenden Behälterstirnwand ein Rotor drehbar gelagert ist, der eine Vielzahl von Rührelementen aufweist. Die Rührelemente sind mit ihrem einen Ende an einer Tragvorrichtung des Rotors befestigt und erstrecken sich parallel zu den Filterelementen in radialem Abstand zu diesen.

Die Filterelemente sind auf mehreren konzentrischen Kreisen um die Rotorachse bzw. Behälterachse des zylindrischen Behälters parallel zu dieser angeordnet. Demgemäß befinden sich auch die an dem Rotor befestigten Rührelemente auf mehreren konzentrischen Kreisen um die Rotorachse. Es entsteht durch die jeweils in einer Drehrichtung verlaufende Bewegung der Rührelemente eine Zirkulationsströmung, d.h. eine umlaufende Rotationsströmung im Behälter, der durch den Einbau von geeigneten Stromstörern entgegengewirkt werden muß. Des weiteren findet eine gezielte Vermischung in Axialrichtung des stehend angeordneten Behälters nicht statt, so daß nach längerer Betriebszeit der Filtervorrichtung aufgrund der Dichteunterschiede zwischen Feststoff und Vorlageflüssigkeit dem dadurch erzeugten Absetzen der Feststoffpartikel eine verstärkte Anlagerung des abzufiltrierenden Feststoffes im unteren Bereich des stehenden Behälters entsteht.

Ziel der vorliegenden Erfindung ist es, eine Filtervorrichtung der eingangs genannten Art so zu verbessern, daß durch das Erzeugen einer turbulenten Strömung im Filtrationsbehälter eine gute Querströmung entlang der Filterelemente, aber auch gute axiale Vermischung im Filtrationsbehälter erzeugt wird.

Diese Aufgabe wird dadurch gelöst, daß die Rührelemente streifenförmig ausgebildet sind und in einem Winkel zur Drehachse des Rotors geneigt sind. Hierdurch streichen die Rührelemente bei einer gleichförmigen Rotationsbewegung des Rotoraufbaus zu unterschiedlichen Zeitpunkten an einem bestimmten Filterelement vorbei. Weil sich beim Entlangstreichen eines Rührelementes in geringem Abstand zu einem Filterelement eine hohe lokale Flüssigkeitsgeschwindigkeit bildet, kommt es zu Flüssigkeits-Ausgleichsströmungen, die in axialer Richtung des Filterelements verlaufen, wodurch eine axiale Vermischung im Filtrationsbehälter erzeugt wird.

Vorzugsweise sind die Längsachsen der Rührelemente schraubenlinienförmig ausgebildet. Indem die streifenförmigen Rührelemente entlang einer imaginären Mantelfläche eines Zylinders mit der Drehachse des Rotors als Längsachse angeordnet sind, bewegen sich die Rührelemente in engem radialen Abstand an den ringförmig um die Drehachse des Rotors angeordneten Filterelemente entlang.

Nach einer bevorzugten Ausführungsform sind die auf mehreren konzentrischen Ringen angeordneten Rührelemente von einer gemeinsamen Antriebseinrichtung rotierend antreibbar. Durch die Winkelneigung der Rührelemente, insbesondere deren schraubenlinienförmige Ausbildung, können die auf mehreren konzentrischen Ringen angeordneten Rührelemente gemeinsam angetrieben werden, ohne daß es einer Drehrichtungsumkehr zwischen benachbarten Ringen von Rührelementen bedarf. Dies kann dadurch bewerkstelligt werden, daß die auf mehreren konzentrischen Ringen angeordneten Rührelemente eine unterschiedliche Winkelneigung zur Drehachse des Rotors besitzen, wodurch die Ausbildung einer umlaufenden Rotationsströmung in Behälter vermieden werden kann.

Insbesondere dadurch, daß die auf mehreren konzentrischen Ringen angeordneten Rührelemente jeweils eine unterschiedliche Neigungsrichtung zur Drehachse des Rotors besitzen, lassen sich ausgeprägte lokale Turbulenzen erzeugen, die eine gute Querströmung, aber auch gute axiale Vermischung bewirken.

Nach einer bevorzugten Ausführungsform sind die jeweils auf einem konzentrischen Kreis angeordneten Rührelemente mit einem stirnseitigen Ende am Rotoraufbau befestigt und mit dem anderen stirnseitigen Ende mit einem Ring verbunden. Hierdurch sind die einzelnen Rührelemente an beiden stirnseitigen Enden lagefixiert und das Auftreten von Schwingungen wie auch Lageverschiebungen aufgrund der in einem turbulenten Strömungsfeld angreifenden, verschiedenen Kräfte an den Rührelemente wird vermieden. Dies ist von großer Wichtigkeit, weil Schwingungen und Lageverschiebungen eine Kollision der Rührelemente mit den Filtermembranen der Filterelemente hervorrufen können, wodurch Betriebsstörungen, wie eine verschlechterte Qualität der gefilterten Flüssigkeit, aber auch Standzeiten zum Austausch beschädigter Filterelemente, entstehen.

Nach einer bevorzugten Ausführungsform können die Filterelemente durch die obere Stirnwand des Behälters in den Behälter eingesetzt werden. Dies gestattet einen problemlosen Wechsel der Filterelemente, falls es zu einer Beschädigung der Filtermembran gekommen ist. Durch das Einsetzen der Filterelemente von oben muß der Behälter nicht entleert werden, wenn ein Filterelement ausgetauscht wird. Dies ist insbesondere im Hinblick darauf von Bedeutung, daß der Behälterinhalt häufig speziell entsorgt werden muß, d.h. bei einem häufigen Wechsel der Filterelemente eine große Menge an Konzentrat anfällt.

Je nach Ausführungsform der Filtervorrichtung kann der Rotoraufbau durch die obere Stirnwand des Behälters oder aber durch die untere Stirnwand des Behälters in den Behälter eingesetzt werden. Dies erleichtert eine flexible Einbindung der Filtervorrichtung in einem übergeordneten Prozeß.

Nachfolgend wird eine Ausführungsform der vorliegenden Erfindung rein beispielhaft anhand der beigefügten Zeichnungen beschrieben. Es zeigen:
- Fig. 1: eine Seitenansicht in teilweiser Schnitt-Darstellung der erfindungsgemäßen Filtervorrichtung;
- Fig. 2: eine Draufsicht auf die obere Stirnwand des Behälters nach Fig. 1 ohne eingesetzte Filterelemente sowie eine Seitenschnittansicht entlang der Linie A-A in der Draufsicht;
- Fig. 3: eine Draufsicht der auf einem äußeren Kreis angeordneten Rührelemente gemäß Fig. 2 sowie eine Seitenschnittansicht derselben entlang der Linie A-A; und
- Fig. 4: eine Draufsicht der auf einem inneren Kreis angeordneten Rührelemente gemäß Fig. 2 sowie eine Seitenschnittansicht derselben entlang der Linie A-A.

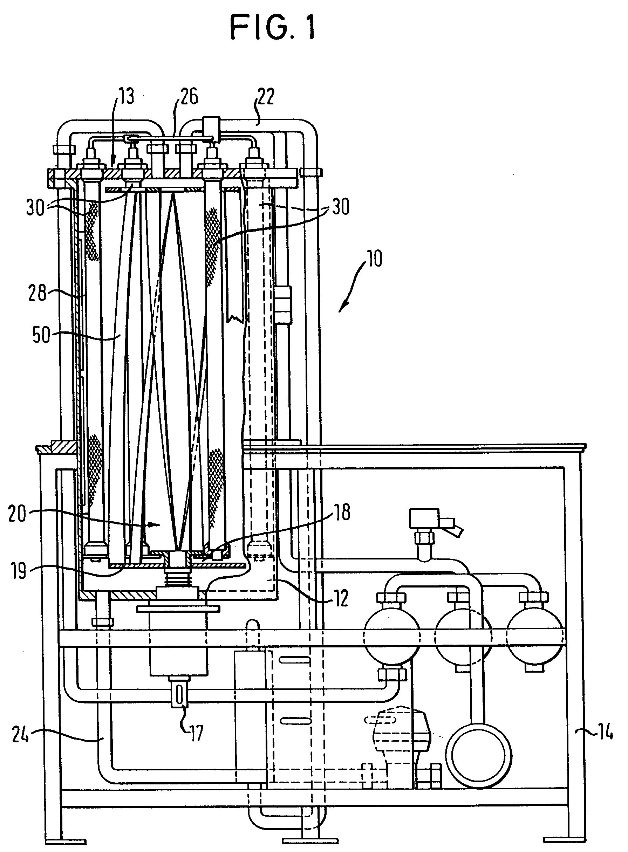

Fig. 1 zeigt eine Seitenansicht der erfindungsgemäßen Filtervorrichtung, die allgemein mit der Referenznummer 10 bezeichnet ist. Die Filtervorrichtung 10 ist in teilweisem Schnitt dargestellt.

Der Kern der Filtervorrichtung 10 ist der Behälter 12, der in geeigneter Weise in einem Aufbau 14 befestigt ist oder in eine übergeordnete Anlage eingebunden ist. Der Behälter 12 ist im dargestellten Beispiel zylinderförmig, kann aber eine andere Geometrie besitzen. Der Behälter kann aus einem beliebigen, geeigneten Material bestehen, wird jedoch bevorzugt aus Kunststoff oder Metall gefertigt.

Der Behälter 12 kann geöffnet werden, beispielsweise indem eine oder zwei stirnseitige Deckel 13 des Behälters entfernt werden. Hierzu kann der oder die Deckel in geeigneter Weise, beispielsweise durch eine Flanschverschraubung oder durch Spannschellen, mit dem Behälterkörper verbunden werden. Der oder die Deckel 13 schließen den Behälter 12 dicht ab, einerseits, um den Austritt unerwünschter Gerüche zu vermeiden, andererseits um den Betrieb der Filtervorrichtung 10 unter erhöhtem Druck zu ermöglichen.

Die zu reinigende Vorlage wird durch eine Einlaufleitung 22 in den Behälter 12 eingeführt. Dabei können sowohl eine einzelne Einlaufleitung als auch mehrere Einlaufleitungen 22 zur Anwendung kommen. Bevorzugt wird die Vorlage von oben in den Behälter 12 eingeleitet. Der Behälter 12 kann in beliebiger Lage angeordnet sein, bevorzugt jedoch ist er stehend angeordnet, wie in Fig. 1 dargestellt ist. In diesem Fall wird die Vorlage bevorzugt durch den oben liegenden Deckel 13 in den Behälter 12 eingeleitet.

Der Behälter 12 kann durch eine Ablaßleitung 24 entleert werden, wahlweise kann auch durch das Einbringen von Reinigungsstoffen durch die Leitung 24 in dem Behälter dieser gereinigt werden. Die Ablaßleitung befindet sich je nach Lage des Behälters 12 an der im wesentlichen am tiefsten gelegenen Stelle des Behälters.

In der in Fig. 1 dargestellten Ausführungsform sind Filterelemente in Form von Filterkerzen 30 parallel zur Längsachse des Behälters 12 in diesem angeordnet. Die Filterkerzen 30 bestehen aus einem Mantel, in dem sich eine Vielzahl von Perforationen für den Durchtritt des Filtrats befinden. Über diesen Mantel ist ein Filtermittel, insbesondere eine Filtermembran, gespannt, das eng an dem Mantel anliegt und Partikel, deren Größe über einer durch die Filtermembran vorgegebenen liegen, an einem Durchtritt in den Mantel der Filterkerze hindern. Die Filterkerzen 30 können sowohl an dem unterseitigen Deckel als auch von dem oberseitigen Deckel befestigt oder durch diese hindurch in den Behälter 12 eingeführt werden; bevorzugt werden die Filterkerzen jedoch an dem oberseitigen Deckel 13 befestigt, um einen einfachen Ein- und Ausbau zu ermöglichen, ohne den Behälter hierzu entleeren zu müssen. Zur Befestigung der Filterkerzen sind verschiedene Möglichkeiten in der Technik bekannt, beispielsweise das Einschrauben der Filterkerzen in den unterseitigen Deckel oder oberseitigen Deckel.

In der in Fig. 1 dargestellten Ausführungsform sind die Filterkerzen in zwei konzentrischen Kreisen um die Längsachse des Behälters 12 angeordnet. Die Filterkerzen gestatten, wie oben beschrieben wurde, den Durchtritt des Filtrats, das im Inneren des Mantels der Filterkerzen transportiert und nach dem Durchtritt durch den Deckel 13 durch die Flüssigkeitsauslaßleitung 26 abgeführt wird.

Um die erwünschten Strömungsbedingungen im Behälter 12 zu erzeugen, ist eine Rotoreinrichtung 20 im Behälter 12 angeordnet. Die Rotoreinrichtung besteht aus einem Rotoraufbau 18 mit daran befestigten Rührelementen 19, die später detailliert beschrieben werden. Der Rotoraufbau 18 wird durch einen Motor (nicht dargestellt) in Drehbewegung versetzt. Hierzu kann beispielsweise mit Hilfe eines Riemenantriebes die Rotation der Ausgangswelle eines Elektromotors auf einen Wellenzapfen 17 übertragen werden.

In der in Fig. 1 dargestellten Ausführungsform tritt der Rotoraufbau durch den unteren Deckel des Behälters 12 in diesen hindurch. Hierzu muß eine dichte Durchführung vorgesehen werden, die auch einem erhöhten Druck im Behälter 12 standhalten kann. In gleicher Weise kann der Rotoraufbau auch durch den oben liegenden Deckel 13 des Behälters in diesen eingeführt werden.

Schließlich können im Behälter 12 auch Stromstörer 28 angeordnet sein, die am Umfang des Behälters verteilt sind und die Ausbildung einer Rotationsströmung verhindern sowie das Erzeugen einer Turbulenz im Behälter fördern sollen.

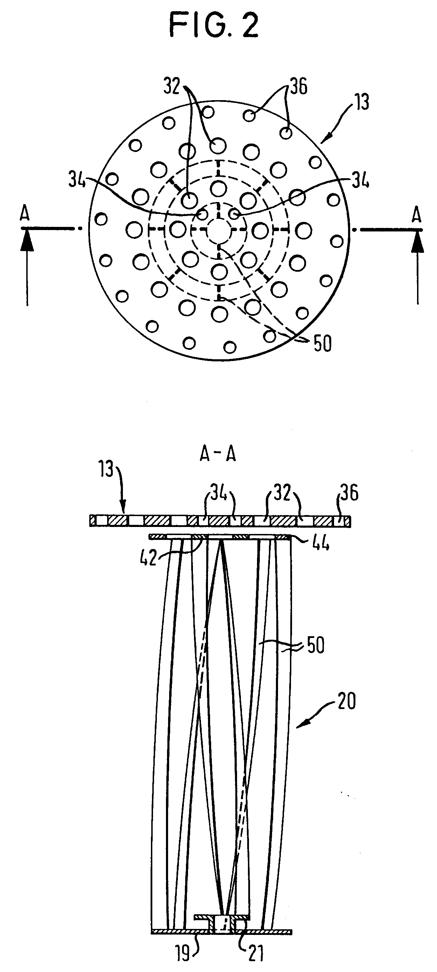

Fig. 2 zeigt eine Draufsicht auf den oberen Deckel 13 des Behälters nach Fig. 1 ohne eingesetzte Filterelemente sowie eine Seitenschnittansicht entlang der Linie A-A in der Draufsicht.

Der obere Deckel 13 ist mit einer Vielzahl von Bohrungen versehen, deren Funktion im folgenden erläutert wird.

Die Bohrungen 32 sind vorzugsweise in gleichem Abstand zueinander entlang eines konzentrischen Kreises um die Längsachse des Behälters 12 angeordnet. Diese Bohrungen 32 dienen dem Einsetzen der Filterkerzen, die, wie bereits oben beschrieben wurde, bevorzugt von oben in den Behälter eingeführt werden. Die Anordnung der Bohrungen 32 entlang von konzentrischen Kreisen ergibt sich, wie im nachfolgenden näher beschrieben wird, aus der Form und Funktion der Rührelemente.

Referenznummer 34 bezeichnet die Bohrungen zur Befestigung der anhand von Fig. 1 beschriebenen Einlaufleitungen für die zu reinigende Flüssigkeit. Die Lage der Bohrungen 34 ist in Fig. 2 rein beispielhaft wiedergegeben und eine Vielzahl anderer Möglichkeiten, die Einlaufleitungen durch den Deckel 13 zu führen, sind denkbar. In gleicher Weise ist es möglich, die Vorlage durch die Mantelfläche des Behälters zu leiten.

Schließlich weist der Deckel 13 noch Bohrungen 36 auf, die ebenfalls entlang eines konzentrischen Ringes im äußeren Umfangsbereich des Deckels angeordnet sind. Diese Bohrungen 36 dienen der Aufnahme von Befestigungselementen, insbesondere Schrauben, um den Deckel 13 mit dem Behälterkörper zu verbinden. Alternativ kann der Deckel 13 mittels Spannschellen am Behälterkörper befestigt werden.

Zusätzlich ist in Fig. 2 die Lage der Rührelemente 50 angedeutet, die entlang von zwei konzentrischen Ringen angeordnet sind und dicht an den durch die Position der Bohrungen 32 in ihrer Lage definierten Filterkerzen entlangstreichen.

Wie schon im Ausführungsbeispiel nach Fig. 1 ist der Rotoraufbau durch den unten liegenden Deckel des Behälters geführt, so daß in Fig. 2 der Deckel 13 keine Öffnung besitzt, um den Rotoraufbau hindurchtreten zu lassen.

Im unteren Teil von Fig. 2 ist eine Seitenansicht entlang der Linie A-A in der obigen Draufsicht auf den Behälter 13 dargestellt. Innerhalb des Behälters 12 ist die Rotoreinrichtung 20 angeordnet, deren Rotationsachse der Längsachse des Behälters entspricht. Die Rotoreinrichtung besteht aus dem Rotoraufbau und den daran befestigten Rührelementen 50.

Der Rotoraufbau, der in Fig. 1 dargestellt ist, umfaßt wiederum eine Befestigungsscheibe 19 sowie einen Befestigungsflansch 21, an denen die Rührelemente 50 angebracht sind. Die Befestigungsscheibe 19 sowie der Befestigungsflansch 21 werden drehfest mit der rotierenden Welle des Rotoraufbaus verbunden und übertragen diese Drehbewegung auf die auf zwei konzentrischen Kreisen angeordneten Rührelemente.

Die Rührelemente sind streifenförmig ausgebildet und in einem Winkel zur Drehachse des Rotors geneigt. Während die streifenförmigen Rührelemente an einem stirnseitigen Ende an der Befestigungsscheibe 19 bzw. dem Befestigungsflansch angebracht sind, ist das andere stirnseitige Ende der Rührelemente 50 an Befestigungsringen 42, 44 angebracht. Bei der in diesem Ausführungsbeispiel vorliegenden Anordnung der Filterkerzen entlang von zwei konzentrischen Kreisen sind auch die Rührelemente entlang zweier konzentrischer Kreise angeordnet. Daher enden die Rührelemente an zwei Befestigungsringen 42 und 44, wobei der Befestigungsring 42 den innen liegenden konzentrischen Kreis von Rührelementen fixiert.

Die Befestigungsringe dienen dazu, den Rührelementen 50 in der Rotoreinrichtung 20 eine höhere Stabilität zu verleihen. Insbesondere soll vermieden werden, daß durch die elastische Biegung der streifenförmigen Rührelemente oder durch das Einwirken der turbulenten Strömung im Behälter die Rührelemente 50 aus ihrer vorbestimmten Lage abgelenkt werden und entweder zu unerwünschten Vibrationen angeregt werden oder die Filtermembran auf den Filterkerzen beschädigen können.

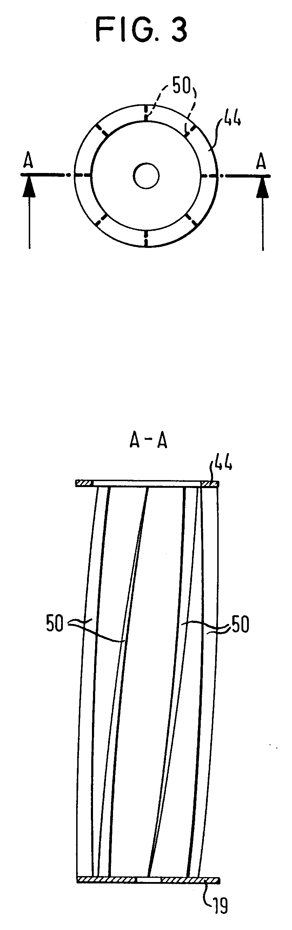

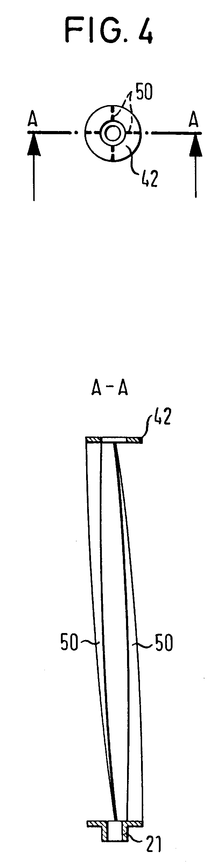

Im vorliegenden Ausführungsbeispiel nach Fig. 2 sind die Rührelemente schraubenlinienförmig ausgebildet. Um die zeichnerisch schwer darstellbare Form der Rührelemente besser verdeutlichen zu können, sind in den nachfolgenden Fig. 3 und 4 jeweils der innere sowie der äußere Ring von Rührelementen getrennt dargestellt.

Fig. 3 zeigt eine Draufsicht der auf einem äußeren Kreis angeordneten Rührelemente gemäß Fig. 2 sowie eine Seitenschnittansicht derselben entlang der Linie A-A in Fig. 2.

Wie aus der oben in Fig. 3 angeordneten Draufsicht erkennbar ist, sind im vorliegenden Beispiel acht Rührelemente auf einem konzentrischen Ring angeordnet, dessen Mittelpunkt der Längsachse der Rotoreinrichtung entspricht. Die Rührelemente 50 sind auf dem Befestigungsring 44 befestigt und in gleichem Abstand zueinander auf dem Umfang des Ringes verteilt.

Wie aus der Schnittansicht entlang der Linie A-A deutlich wird, sind die Rührelemente 50 so angeordnet, daß ihre Längsachsen nicht parallel zur Rotorachse verlaufen. Dies bedeutet, daß die Rührelemente 50 unter einem definierten Winkel zur Rotorachse stehen. Dieser Winkel kann entlang der Längsachse der Rührelemente eine konstante Größe darstellen, kann sich jedoch auch über die Lauflänge der Rührelemente ändern. Um eine gute Turbulenz im Behälter zu erzeugen, kann es des weiteren möglich sein, die Abstände der Rührelemente 50 zueinander über deren Lauflänge zu verändern.

Die Rührelemente sind an ihrem einen Ende fest mit dem Befestigungsring 44 verbunden, was im Falle der Verwendung metallischer Werkstoffe für die Rührelemente und den Befestigungsring durch Schweißen, Hartlöten oder ähnliches geschehen kann. Ebenso sind die Rührelemente 50 an dem bezüglich des Behälters unten liegenden Ende an der Befestigungsscheibe 19 angebracht, die einen Teil des Rotoraufbaus darstellt. Auch die Befestigungsscheibe 19 kann aus Metall gefertigt sein und die Verbindung der Rührelemente mit der Befestigungsscheibe durch Schweißen oder Hartlöten geschehen. Jedoch sind auch andere Möglichkeiten denkbar, diese Bauteile miteinander fest zu verbinden. Die Rührelemente können auch aus einem geeigneten Kunststoff gefertigt sein und die Befestigung der Rührelemente auf eine beliebige andere, in der Technik bekannte Weise erfolgen.

Fig. 4 zeigt eine Draufsicht der auf einem inneren Kreis angeordneten Elemente gemäß Fig. 2 sowie eine Seitenschnittansicht derselben entlang der Linie A-A.

In der oben dargestellten Draufsicht sind die Rührelemente 50 auf einem inneren Kreisring angeordnet, dessen Mittelpunkt der Drehachse der Rotoreinrichtung entspricht. Die streifenförmigen Rührelemente 50 sind so angeordnet, daß sie im wesentlichen eine Rotationsströmung im Behälter erzeugen. Im dargestellten Beispiel sind auf dem inneren Kreisring vier Rührelemente in jeweils gleichem Abstand zueinander angeordnet.

Die Seitenschnittansicht entlang der Linie A-A in Fig. 4 zeigt, daß auch die auf einem inneren Kreise angeordneten Rührelemente bezüglich ihrer Längsachse in einem Winkel zur Drehachse des Rotors geneigt sind. In der in den Fig. 1 bis 4 dargestellten, bevorzugten Ausführungsform sind, wie aus einem Vergleich der Fig. 3 und 4 deutlich wird, die Neigungsrichtungen der Rührelemente auf dem äußeren Kreisring sowie dem inneren Kreisring unterschiedlich. Dies besitzt den Vorteil, daß bei einer gleichen Rotationsrichtung der Befestigungsscheibe 19 sowie des Befestigungsflansches 21 sich dennoch unterschiedliche Strömungszustände im Behälter im Bereich der ringförmig angeordneten Rührelemente einstellen. So läßt sich durch eine geeignete Anordnung der Rührelemente eine unterschiedliche axiale Strömungskomponente im Bereich der verschiedenen mit Rührelementen bestückten Ringe herbeiführen, wodurch eine hohe Turbulenz im Rührbehälter erzeugt wird.

Die in Fig. 4 dargestellten Rührelemente 50 sind bevorzugt aus Metall und mit einem der oben erwähnten Verfahren sowohl an dem inneren Befestigungsring 42 als auch an dem Befestigungsflansch 21 befestigt. Wie bereits oben erwähnt wurde, können die Rührelemente entlang des inneren Kreisringes ebenfalls aus einem beliebigen Material gefertigt sein, so auch aus Kunststoff.

Durch die geneigte Anordnung der Rührelemente 50 werden eine zusätzliche Turbulenzkomponente in axialer Richtung des Behälters erzeugt und die Strömungsverhältnisse in der Filtervorrichtung deutlich verbessert. Gleichzeitig befinden sich die Rührelemente, die jeweils auf einem konzentrischen Ring angeordnet sind, entlang der imaginären Mantelflächen eines innen sowie eines außen angeordneten Zylinders, deren Längsachsen der Drehachse des Rotors entspricht. Dadurch wird durch die gezielte Anordnung der Rührelemente in unmittelbarer Nähe zu den Filterkerzen die Tendenz verringert, daß sich Ablagerungen auf der Oberfläche der Filterkerzen ansammeln können und den Flüssigkeitsdurchsatz durch die Filtervorrichtung aufgrund des daraus resultierenden, erhöhten Druckverlustes verringern.

Soll eine Erhöhung des Druckverlustes durch vereinzelte Ablagerungen auf der Oberfläche der Filterkerzen vermieden werden, bietet sich an, einen Pumpen-Bypass vorzusehen, der den Behälterdruck konstant hält.

## Patentansprüche

1. Filtervorrichtung zum Trennen von dispergierten Feststoffen oder Flüssigkeiten aus einer Flüssigkeit, umfassend einen Behälter mit einem Rotoraufbau mit daran befestigten Rührelementen, die auf einem oder mehreren zur Drehachse des Rotors konzentrischen Kreisen angeordnet sind; und
einer Vielzahl von Filterelementen, die in dem Behälter parallel zur Drehachse des Rotors und ringförmig auf mindestens einem zur Drehachse des Rotors konzentrischen Ring angeordnet sind,
dadurch **gekennzeichnet,** daß
die Rührelemente streifenförmig ausgebildet sind und in einem Winkel zur Drehachse des Rotors geneigt sind.

2. Filtervorrichtung nach Anspruch 1, dadurch gekennzeichnet, daß die Längsachsen der Rührelemente schraubenlinienförmig ausgebildet sind.

3. Filtervorrichtung nach Anspruch 1, dadurch gekennzeichnet, daß
die streifenförmigen Rührelemente entlang einer imaginären Mantelfläche eines Zylinders mit der Drehachse des Rotors als Längsachse angeordnet sind.

4. Filtervorrichtung nach einem der vorhergehenden Ansprüche, dadurch gekennzeichnet, daß die auf mehreren konzentrischen Ringen angeordneten Rührelemente von einer gemeinsamen Antriebseinrichtung rotierend antreibbar sind.

5. Filtervorrichtung nach Anspruch 4, dadurch gekennzeichnet, daß die streifenförmigen Rührelemente mit deren schmaler Längsseite entlang den feststehenden Filterelementen und in geringem radialen Abstand zu diesen bewegbar sind.

6. Filtervorrichtung nach Anspruch 1, dadurch gekennzeichnet, daß die auf mehreren konzentrischen Ringen angeordneten Rührelemente unterschiedliche Winkelneigung zur Drehachse des Rotors besitzen.

7. Filtervorrichtung nach Anspruch 1, dadurch gekennzeichnet, daß die auf mehreren konzentrischen Ringen angeordneten Rührelemente jeweils eine unterschiedliche Neigungsrichtung zur Drehachse des Rotors besitzen.

8. Filtervorrichtung nach einem der vorhergehenden Ansprüche, dadurch gekennzeichnet, daß die Filterelemente durch die obere Stirnwand des Behälters in den Behälter einsetzbar sind.

9. Filtervorrichtung nach Anspruch 1, dadurch gekennzeichnet, daß der Behälter zylindrisch ist.

10. Filtervorrichtung nach Anspruch 1, dadurch gekennzeichnet, daß die jeweils auf einem konzentrischen Kreis angeordneten Rührelemente, mit dem stirnseitigen Ende am Rotoraufbau befestigt sind und an dem anderen stirnseitigen Ende mit einem Ring verbunden sind.

11. Filtervorrichtung nach Anspruch 8, dadurch gekennzeichnet, daß der Rotoraufbau durch die obere Stirnwand des Behälters in den Behälter einsetzbar ist.

12. Filtervorrichtung nach Anspruch 8, dadurch gekennzeichnet, daß der Rotoraufbau durch die untere Stirnwand des Behälters in den Behälter einsetzbar ist.
